**Europäisches Patentamt**

**European Patent Office**

**Office européen des brevets**

(19)

(11) Veröffentlichungsnummer: **0 017 028**
**B1**

(12) # EUROPÄISCHE PATENTSCHRIFT

(45) Veröffentlichungstag der Patentschrift:
**06.07.83**

(51) Int. Cl.³: **C 01 B 33/18**

(21) Anmeldenummer: **80101260.0**

(22) Anmeldetag: **12.03.80**

(54) Verfahren zur Herstellung einer kristallinen SiO2-Modifikation.

(30) Priorität: **14.03.79 DE 2909930**

(43) Veröffentlichungstag der Anmeldung:
**15.10.80 Patentblatt 80/21**

(45) Bekanntmachung des Hinweises auf die Patenterteilung:
**06.07.83 Patentblatt 83/27**

(84) Benannte Vertragsstaaten:
**AT BE DE FR GB IT NL**

(56) Entgegenhaltungen:
**keine**

(73) Patentinhaber: **BASF Aktiengesellschaft,
Carl-Bosch-Strasse 38, D-6700 Ludwigshafen (DE)**

(72) Erfinder: **Marosi, Laszlo, Dr., Londoner Ring 11,
D-6700 Ludwigshafen (DE)**
Erfinder: **Stabenow, Joachim, Dr., Am Feldrain 22,
D-6940 Weinheim (DE)**
Erfinder: **Schwarzmann, Matthias, Dr.,
Carl-Bosch-Strasse 54, D-6703 Limburgerhof (DE)**

## Verfahren zur Herstellung einer kristallinen SiO₂-Modifikation

Es sind eine Reihe kristalliner SiO₂-Modifikationen bekannt. Diese zeichnen sich durch eine Vielzahl bemerkenswerter Eigenschaften aus. So ist auch eine SiO₂-Modifikation bekannt, die Molekularsiebeigenschaften aufweist. Die Herstellung dieser SiO₂-Modifikation erfolgt in Gegenwart von Tetrapropylammoniumhydroxid.

Aus DE-A-2 743 143 ist schon ein Verfahren zur Herstellung von polymorphen Siliziumdioxid bekannt, bei dem man die Kristallisation aus einem SiO₂-haltigen Gemisch vornimmt, das neben Fluoridionen, Alkali und -quaternäre Stickstoff- oder Phosphoniumverbindungen enthält.

In EP-A-0 015 132 ist schon vorgeschlagen worden, kristalline Zeolithe aus Gemischen von SiO₂ mit organischen Verbindungen mit 1 bis 20 C-Atomen durch Kristallisation zu gewinnen.

Die Erfindung betrifft ein Verfahren zur Herstellung einer kristallinen SiO₂-Modifikation.

Es wurde nun gefunden, daß man eine kristalline SiO₂-Modifikation mit einem Röntgenbeugungsdiagramm, das mindestens folgende Beugungslinien aufweist:

| d (Å) | I |
|-------|-----|
| 11,60 | 36 |
| 10,02 | 15 |
| 5,80 | 11 |
| 4,18 | 100 |
| 3,87 | 79 |
| 2,84 | 16 |

in Gegenwart von Aminen als Lösungsmittel bei Temperaturen von 100−200° C erhält, wenn man ein reaktionsfähiges amorphes SiO₂ in Gegenwart von Hexamethylendiamin unter hydrothermalen Bedingungen kristallisiert.

Bei der Durchführung des erfindungsgemäßen Verfahrens wird z. B. ein reaktionsfähiges amorphes SiO₂ bei erhöhten Temperaturen mit wäßrigen Lösungen von Hexamethylendiamin behandelt. Im allgemeinen erhält man in Abhängigkeit von den Reaktionsbedingungen ein Gemisch zweier kristalliner Phasen, die nach Entfernen der Mutterlauge aus reinem SiO₂ besteht. Die eine Modifikation erweist sich als das aus reinem SiO₂ bestehende Analoge des bekannten Aluminosilikatzeolithes ZSM-5, die andere Modifikation hat eine neue, von diesem abweichende Kristallstruktur.

Eine besondere Ausführungsform des erfindungsgemäßen Verfahrens besteht darin, daß man reaktionsfähiges amorphes SiO₂ in einer wäßrigen Lösung von Hexamethylendiamin homogen verrührt und die Mischung in einem geschlossenen Reaktionsgefäß 1/2 bis 50 Tage auf Temperaturen zwischen 100 bis 200° C erhitzt. Bevorzugt werden Temperaturen von 120 bis 170° C in einem Zeitraum von 0,5 bis 7 Tagen, insbesondere 140 bis 160° C in 1 bis 5 Tagen angewendet.

Als Ausgangsstoffe kommen alle amorphen reaktionsfähigen SiO₂-Arten, sowie verschiedene Kieselsäuren in Frage. Geeignet ist als Lösungsmittel Hexamethylendiamin in wäßriger Lösung, z. B. eine 50prozentige Lösung. Nach erfolgter Kristallisation wird das Produkt filtriert, gewaschen und getrocknet. In diesem Zustand enthält das Produkt noch größere Mengen Wasser und Hexamethylendiamin. Diese Komponenten können beispielsweise durch Erhitzen auf 100 bis 900° C, vorzugsweise 200 bis 600° C, aus dem Produkt entfernt werden. Der zurückbleibende Stoff besteht dann wie die chemische Analyse zeigt aus reinem SiO₂. Man erhält die erfindungsgemäß hergestellte SiO₂-Modifikation in vielen Fällen im Gemisch mit dem reinen SiO₂-Analogen des bekannten aluminosilikatzeoliths ZSM-5. Die d-Werte der wichtigsten Beugungslinien dieser Phase sind folgende:

11,1/10,0/3,85/3,80/3,70/
3,65/3,04/2,97/2,60/2,48/
2,40/2,01/1,99.

Durch geeignete Wahl der Zusammensetzung der Reaktionsmischung kann die Kristallisation so gelenkt werden, daß überwiegend oder ganz die neue kristalline SiO₂-Modifikation entsteht. Es hat sich gezeigt, daß geringe Mengen von Al, Bor oder anderen Metallen, die oft als Verunreinigungen vorhanden sind, die Bildung der ZSM-5-artigen Struktur begünstigen. Auch das Rühren oder Schütteln während der Kristallisation hat einen Einfluß auf die Produktzusammensetzung.

Es wurde weiterhin gefunden, daß die Anwesenheit von [PO₄]- und/oder [SO₄]-Anionen zusammen mit Natriumionen während der Kristallisation die Bildung der erfindungsgemäß herstellbaren SiO₂-Modifikation in reiner Form bewirkt. Das so hergestellte Produkt zeigt stets die in der nachfolgenden Tabelle 1 angegebenen Beugungslinien und weist keine weitere kristalline Beimengungen auf. Die chemische Analyse ergibt nur geringfügige Anteile an [PO₄]- oder [Na]-Ionen.

Tabelle 1

| d (Å) | I |
|-------|-----|
| 11,60 | 36 |
| 10,02 | 15 |
| 5,80 | 11 |
| 4,18 | 100 |
| 3,87 | 79 |
| 2,84 | 16 |

Die Röntgenbeugungsdiagramme werden mit Hilfe eines automatischen Phillips-Diffraktometers aufgenommen. Es wird CuKa-Strahlung verwendet. Die angegebenen Werte sind mit den für ein solches Aufnahmeverfahren üblichen Fehlern behaftet. Die Genauigkeit der d-Werte beträgt bei kleinen Beugungswinkeln etwa $\pm 0,3$ Å, bei großen Beugungswinkeln $\pm 0,1$ bis $\pm 0,05$ Å. In der Tabelle 1 sind nur die wichtigsten d-Werte der Beugungslinien angegeben, die aber dem Fachmann eine eindeutige Charakterisierung dieser neuen Modifikation ermöglichen. Ein charakteristisches Beugungsdiagramm, das alle intensiven Beugungslinien enthält, ist in der folgenden Tabelle 2 zusammengestellt.

Tabelle 2

| d (Å) | I | d (Å) | I |
|-------|-----|-------|-----|
| 11,60 | 36 | 3,56 | 6 |
| 10,02 | 15 | 3,40 | 5 |
| 7,08 | 5 | 3,35 | 7 |
| 6,05 | 6 | 3,06 | 3 |
| 5,80 | 11 | 2,84 | 16 |
| 4,18 | 100 | 2,09 | 8 |
| 3,87 | 79 | 2,07 | 4 |
| 3,60 | 4 | | |

Die Intensität der Beugungslinien kann je nach Vorbehandlung der Probe z. B. durch Trocknung oder Kalzinierung, Schwankungen unterworfen sein, die jedoch eine eindeutige Charakterisierung dieser neuen SiO$_2$-Modifikation nicht erschweren.

Die erfindungsgemäß herstellbaren SiO$_2$-Modifikationen sind insbesondere selektiv wirkende Adsorptionsmittel, z. B. als Molekuarsiebe geeignet.

Die Durchführung des erfindungsgemäßen Verfahrens wird an Hand der nachstehenden Beispiele näher erläutert.

Beispiel 1

5 g pyrogene Kieselsäure (Aerosil) werden bei 60° C in 95 g 42prozentige wäßrige Hexamethylendiaminlösung homogen eingerührt. Die Mischung wird dann in einem Stahlautoklaven für 5 Tage auf 150° C unter ihrem Eigendruck erhitzt, wobei der Autoklav geschüttelt wird. Das gebildete kristalline Produkt wird filtriert, mit destilliertem Wasser gewaschen und über Nacht bei 570° C kalziniert. Die Röntgenbeugungsanalyse ergibt, daß das kristalline Material zu etwa 80% aus der neuen kristallinen SiO$_2$-Modifikation besteht und etwa 20% SiO$_2$ mit der Kristallstruktur des Aluminosilikatzeoliths ZSM-5 aufweist. Die chemische Analyse ergibt, daß das Produkt aus reinem SiO$_2$ besteht

Beispiel 2

11 g pyrogene Kieselsäure (Aerosil) werden bei 60° C in 118 g 50prozentige wäßrige Hexamethylendiaminlösung eingetragen und die Mischung homogenisiert. Die Mischung wird dann in einem Stahlautoklaven für 5 Tage auf 150° C unter ihrem Eigendruck erhitzt. Das gebildete kristalline Produkt besteht laut Röntgenbeugungsanalyse zu etwa 50% aus neuen kristallinen SiO$_2$-Modifikation und zu etwa 50% aus SiO$_2$ mit der Kristallstruktur des bekannten Aluminosilikatzeoliths ZSM-5.

Beispiel 3

Es werden drei Lösungen hergestellt. Lösung 1 besteht aus 130 g Aerosil, 47,6 g NaOH und 783 g Wasser, Lösung 2 aus 70 g Phosphorsäure in 712 g Wasser und Lösung 3 aus 420 g 50prozentiger Hexamethylendiaminlösung.

Die Lösungen 3 und 2 werden unter Rühren zu Lösung 1 hinzugeben und die Mischung homogenisiert. Die Mischung wird dann unter Rühren 5 Tage auf 150° C unter ihrem Eigendruck erhitzt. Das kristalline Produkt wird filtriert, gewaschen und getrocknet. Laut Röntgenbeugungsanalyse besteht es zu 100% aus der neuen kristallinen SiO$_2$-Modifikation mit den Beugungslinien wie sie in der Tabelle 2 angegeben sind.

Beispiel 4

Zu einer homogenen Mischung aus 11,45 g Aerosil und 118 g 50prozentiger Hexamethylendiaminlösung werden 6 g Na$_2$SO$_4$ hinzugegeben und die Mischung in einem Schüttelautoklaven für 5 Tage auf 150° C erhitzt.

Das gebildete Produkt besteht zu über 90% aus der neuen kristallinen SiO₂-Modifikation.

## Patentansprüche

1. Verfahren zur Herstellung einer kristallinen SiO₂-Modifikation mit einem Röntgenbeugungsdiagramm, das mindestens folgende Beugungslinien aufweist:

| d (Å) | I |
|---|---|
| 11,60 | 36 |
| 10,02 | 15 |
| 5,80 | 11 |
| 4,18 | 100 |
| 3,87 | 79 |
| 2,84 | 16 |

in Gegenwart von Aminen als Lösungsmittel bei Temperaturen von 100–200° C, dadurch gekennzeichnet, daß man ein reaktionsfähiges amorphes SiO₂ in Gegenwart von Hexamethylendiamin unter hydrothermalen Bedingungen kristallisiert.

2. Verfahren nach Anspruch 1, dadurch gekennzeichnet, daß man bei der Kristallisation [Na]-Ionen und [PO₄]- und/oder [SO₄]-Ionen zusetzt.

## Claims

1. A process for the preparation of a crystalline SiO₂-modification having an X-ray diffraction diagram which exhibits at least the following diffraction lines:

Tabelle 1

| d (Å) | I |
|---|---|
| 11,60 | 36 |
| 10,02 | 15 |
| 5,80 | 11 |
| 4,18 | 100 |
| 3,87 | 79 |
| 2,84 | 16 |

in the presence of an amine as solvent at 100 to 200° C, wherein a reactive amorphous SiO₂ is crystallized under hydrothermal conditions in the presence of hexamethylenediamine.

2. A process as claimed in claim 1, wherein [Na] ions and [PO₄] and/or [SO₄] ions are added during the crystallization.

## Revendications

1. Procédé de préparation d'une forme cristalline de SiO₂ présentant un diagramme de diffraction de rayons X qui contient au moins les raies de diffraction suivantes:

Tabelle 2

| d (Å) | I | d (Å) | I |
|---|---|---|---|
| 11,60 | 36 | 3,56 | 6 |
| 10,02 | 15 | 3,40 | 5 |
| 7,08 | 5 | 3,35 | 7 |
| 6,05 | 6 | 3,06 | 3 |
| 5,80 | 11 | 2,84 | 16 |
| 4,18 | 100 | 2,09 | 8 |
| 3,87 | 79 | 2,07 | 4 |
| 3,60 | 4 | | |

en présente d'amines qui servent de solvants à des températures de 100 à 200° C, caractérisé en ce que l'on fait cristalliser une SiO₂ amorphe réactive en présence d'hexaméthylène-diamine dans des conditions hydrothermiques.

2. Procédé selon la revendication 1, caractérisé en ce que l'on ajoute à la cristallisation des ions Na et des ions PO₄ et/ou SO₄.